# EUROPÄISCHE PATENTSCHRIFT

(11) **EP 3 408 075 B1**
(45) Veröffentlichungstag und Bekanntmachung des Hinweises auf die Patenterteilung: **27.10.2021**
(21) Anmeldenummer: 17700226.8
(22) Anmeldetag: 10.01.2017
(51) Int. Cl.: B29C 70/44, B30B 5/02, B29C 51/36

(54) **VERFAHREN ZUM HERSTELLEN EINES BAUTEILS AUS EINEM FASERVERBUNDWERKSTOFF**
METHOD FOR PRODUCING A COMPONENT FROM A FIBER COMPOSITE MATERIAL
PROCÉDÉ POUR LA FABRICATION D'UNE PIÈCE EN MATÉRIAU COMPOSITE RENFORCÉ PAR DES FIBRES

(30) Priorität: 29.01.2016 DE 102016101641
(43) Veröffentlichungstag der Anmeldung: 05.12.2018
(73) Patentinhaber: Siempelkamp Maschinen- und Anlagenbau GmbH, 47803 Krefeld (DE)
(72) Erfinder: DREES, Reinhold, 47800 Krefeld (DE); SCHOELER, Michael, 47509 Rheurdt (DE)
(74) Vertreter: Andrejewski - Honke Patent- und Rechtsanwälte Partnerschaft mbB
(86) Internationale Anmeldenummer: PCT/EP2017/050406
(87) Internationale Veröffentlichungsnummer: WO 2017/129393

(56) Entgegenhaltungen:
- EP-A1- 0 584 017
- EP-A1- 2 070 678
- WO-A1-90/03880
- WO-A1-2011/159240
- DE-A1- 3 727 926

## Beschreibung

Die Erfindung betrifft ein Verfahren zum Herstellen eines (dreidimensionalen) Bauteils aus einem Faserverbundwerkstoff durch Umformen eines (zweidimensionalen) thermoplastischen Halbzeugs, z. B. Organoblechs.

Organoblech meint im Rahmen der Erfindung ein plattenförmiges (konsolidiertes) Halbzeug, welches aus Fasern besteht, die in eine Matrix aus thermoplastischem Kunststoff eingebettet sind. Die Fasern können als Endlosfasern oder Langfasern vorliegen, zum Beispiel in Form eines Fasergewebes oder Fasergeleges. Bei den Fasern kann es sich zum Beispiel um Kohlenstofffasern, Glasfasern oder Aramidfasern handeln. Solche Organobleche werden als Faserverbundwerkstoffe für die Herstellung von Bauteilen (z. B. Leichtbau) für die Luft- und Raumfahrttechnik (z. B. den Flugzeugbau) und für die Fahrzeugtechnik (z. B. im Automobilbau) eingesetzt. Durch die thermoplastische Fasermatrix lassen sich solche Organobleche ähnlich wie Metallbleche (warm) umformen, so dass in der Praxis bei der Verarbeitung von Organoblechen bzw. bei der Herstellung von Bauteilen aus solchen Organoblechen auf Methoden der Metallblechverarbeitung zurückgegriffen wird.

So beschreibt zum Beispiel die DE 10 2011 115 730 A1 ein Verfahren zum Umformen von thermoplastischen Faserhalbzeugplatten mit orientierten Fasern zu dreidimensional geformten thermoplastischen Halbzeugen mit definierten Orientierungsgraden, wobei die als Organoblech ausgebildete Faserhalbzeugplatte durch eine Heizvorrichtung auf eine Temperatur unterhalb einer Erweichungstemperatur des Thermoplasten erwärmt wird, wobei die Faserhalbzeugplatte auf einem Formmodul positioniert wird, das die dreidimensionale Form abbildet. Anschließend wird ein Fluid in die Formkammer zugeführt und dadurch die erwärmte Faserhalbzeugplatte an das Formmodul angepresst und hierdurch zu dem dreidimensional geformten thermoplastischen Halbzeug umgeformt.

Weitere Verfahren zur Verarbeitung von Organoblechen bzw. von Bauteilen aus solchen Organoblechen werden zum Beispiel in der DE 10 2013 105 080 A1, der DE 10 2011 111 233 A1 und der DE 10 2011 111 232 A1 beschrieben.

Alternativ wird in der DE 198 59 798 C1 die Herstellung von Formkörpern aus Faserverbundwerkstoffen durch das sogenannte Prepreg-Verfahren beschrieben. Dabei werden dünne Lagen von in teilausgehärtetem Harz eingebetteten Fasern laminiert, bis eine Vorform des Formkörpers entstanden ist. Anschließend wird diese Vorform unter mechanischem Druck bei gleichzeitiger Einwirkung eines Vakuums zum Abziehen von Luftblasen aus der Vorform durch Erwärmen ausgehärtet. Dies geschieht typischerweise in einem Autoklaven, in dem die Vorform auf einer Negativform aufliegt und von einer flexiblen Membran abgedeckt wird. Die flexible Membran ist gegenüber der Negativform abgedichtet. Dabei ist zwischen der Vorform der Membran noch eine Schicht aus Gewebematerial angeordnet, die zum Aufnehmen von überschüssigem Harz und zur Ausbildung einer Vakuumzone, des sogenannten Vakuumsacks dient. Der Bereich des Vakuumsacks ist an einer Vakuumquelle angeschlossen.

Davon ausgehend wird in der DE 198 59 798 C1 ein Verfahren zum Herstellen von Formkörpern aus Faserverbundwerkstoffen beschrieben, das auf einem RTM-Verfahren aufbaut. Auf eine steife Negativform wird eine Fasermatte aufgebracht und die Fasermatte wird mit einer flexiblen Membran abgedeckt. Die Membran wird gegenüber der Negativform um die Fasermatte umlaufend abgedichtet und der derart abgedichtete Zwischenraum zwischen der Negativform und der Membran wird evakuiert und auf der der Negativform abgekehrten Rückseite der Membran wird ein statischer Überdruck aufgebracht. Dann wird in den Zwischenraum zwischen der Negativform und der Membran eine Menge flüssigen Harzes mit einem Injektionsdruck injiziert, der größer ist als der Überdruck auf der Rückseite der Membran. Das Harz wird durch die beheizte Negativform unter Einwirkung des Überdrucks auf der Rückseite der Membran erwärmt und zumindest teilweise ausgehärtet. Der Überdruck auf der Rückseite der Membran wird dann abgelassen und der Formkörper mit der in das zumindest teilweise ausgehärtete Harz eingebetteten Fasermatte entformt. Die Negativform kann dabei kontinuierlich beheizt werden und die Membran kann auf ihrer Rückseite gekühlt werden.

Ähnliche Verfahren, bei denen mit einer Membranpresse gearbeitet und ein Harz in den Formraum injiziert wird, werden zum Beispiel in der EP 1 420 940 B1 oder der DE 694 09 618 T2 beschrieben.

Die DE 40 40 746 A1 beschreibt ein Verfahren zum Verdichten eines Verbundmaterialkörpers mit einer Struktur aus unverdichteten Schichten verstärkenden Fasern, die in eine Matrix eingebettet sind, in einer Membranpresse.

Ein gattungsgemäßes Verfahren zur Herstellung von verstärkten Kunststoffprodukten durch Pressen von thermoplastischen Platten ist aus der WO 90/03880 A1 bekannt. Es werden Vorprodukte verarbeitet, die zu 60 % bis 90 % aus einem Thermoplast und zu 10 % bis 40 % aus Verstärkungsfasern bestehen. Die Platte kann eine Dicke von 3 mm aufweisen. Sie soll zunächst vorgewärmt und dann in eine Form gelegt werden und dort mit einem Pressdruck von weniger als 1 MPa und folglich weniger als 10 bar umgeformt werden.

Außerdem kann ein Unterdruck erzeugt werden und dazu kann auch eine poröse Form verwendet werden.

Eine Presse zum Herstellen eines Bauteils aus einem Faserverbundwerkstoff ist im Übrigen aus der EP 0 584 017 A1 bekannt.

Der Erfindung liegt die Aufgabe zugrunde, ein Verfahren zum Herstellen von (Leicht-)Bauteilen aus Faserverbundwerkstoffen mit hoher Qualität und hoher Stabilität zu schaffen.

Zur Lösung dieser Aufgabe lehrt die Erfindung ein Verfahren zum Herstellen eines Bauteils aus einem Faserverbundwerkstoff durch Umformen eines thermoplastischen Halbzeugs, z B. Organoblechs, mit den Merkmalen des Anspruches 1.

In der Membranpresse ist/wird eine Form angeordnet, wobei zumindest ein Halbzeug als Werkstück an oder auf die Form gelegt wird,
wobei eine elastisch dehnbare Membran unter Zwischenschaltung des Halbzeugs über die Form gedehnt vorgespannt wird und
wobei das Halbzeug unter Bildung des Bauteils umgeformt wird, indem die Membran auf der der Form zugewandten Seite mit einem Unterdruck und auf der der Form abgewandten Seite mit einem Überdruck beaufschlagt wird, so dass sich das Organoblech an die Form anformt, wobei eine zumindest bereichsweise luftdurchlässige Form verwendet wird, durch welche Luft im Zuge der Erzeugung des Unterdrucks hindurchgesaugt wird und wobei der Überdruck zumindest 20 bar beträgt.

Die Erfindung geht dabei zunächst einmal von der Erkenntnis aus, dass sich dreidimensionale Faserverbundbauteile mit hoher Stabilität und hoher Genauigkeit wirtschaftlich aus z. B. Organoblechen in einer Membranpresse herstellen lassen, wobei solche Organobleche als (zweidimensionale) plattenförmige konsolidierte Halbzeuge zur Verfügung stehen und sich in der Membranpresse hervorragend unter Anwendung von Druck und Wärme zu dreidimensionalen Strukturen umformen lassen, die zum Beispiel im Flugzeugbau, Fahrzeugbau oder dergleichen einsetzbar sind. Dabei wird - im Gegensatz zu herkömmlichen Prepreg-Verfahren - bevorzugt nicht mit lediglich teilausgehärteten Matten, sondern mit konsolidierten Halbzeugen in Form von Organoblechen gearbeitet, so dass auch kein Injizieren flüssiger Harze oder dergleichen in die Presse erfolgt. Besonders bevorzugt wird dabei ein Organoblech als vorgefertigtes Halbzeug verwendet, das aus mehreren Organoblechlagen besteht, die vor dem Einlegen in die Presse zusammengelegt und gegebenenfalls miteinander verbunden werden. Auf diese Weise lassen sich sehr stabile Bauteile herstellen, die auch eine gewisse Dicke bzw. Wandstärke aufweisen können. Dennoch gelingt im Rahmen der Erfindung in der Membranpresse eine einwandfreie Umformung, da in die Presse eine (hoch-)elastisch dehnbare Membran eingespannt ist, welche unter Zwischenschaltung des Organoblechs elastisch gedehnt und über die Form gespannt wird. Durch das Anlegen von Unterdruck einerseits und Überdruck andererseits erfolgt dann eine einwandfreie Umformung, wobei sich die hochelastische Membran stark dehnt und einwandfrei an die gewünschte Kontur bzw. unter Zwischenschaltung des Organoblechs an die Kontur der Form anlegt. Durch das Anlegen von Unterdruck einerseits und sehr hohem Überdruck andererseits gelingt die Umformung konsolidierter Organobleche zu Bauteilen mit komplexer Struktur und kleinen Radien, so dass sich zum Beispiel auch U-förmige Profile mit und ohne Hinterschneidung einwandfrei herstellen lassen. Über hohe Drücke in der Membranpresse wird eine einwandfreie Entlüftung des Werkstücks gewährleistet, so dass Porenbildungen vermieden bzw. Poren entfernt werden können. Insgesamt zeichnen sich die hergestellten Bauteile durch sehr hohe Oberflächenqualität und hohe Stabilität aus. Die Erfindung umfasst aber auch die Umformung anderer thermoplastischer Halbzeuge. So können insbesondere auch mehrere (nicht konsolidierte) thermoplastische Einzellagen (aus Faserverbundwerkstoff) als Halbzeug in die Presse eingelegt und verarbeitet werden.

Insgesamt können zum Beispiel hochstabile, leichte Bauteile für den Flugzeugbau, zum Beispiel für Tragflächen bzw. Tragflächenteile hergestellt werden. Beispielsweise können Profile hergestellt werden, die als Bestandteil von Landeklappen zum Einsatz kommen können.

Erfindungsgemäß ist vorgesehen, dass die Form zumindest bereichsweise luftdurchlässig ausgebildet ist. Dieses ist dadurch realisiert, dass eine Form aus einem porösen Werkstoff verwendet wird. Bevorzugt wird eine Form aus einem porösen Leichtmetall, besonders bevorzugt aus porösem Aluminium oder einer porösen Aluminiumlegierung verwendet. Die Erfindung geht dabei von der Erkenntnis aus, dass sich durch Einsatz einer derartigen Form der Herstellungsprozess optimieren lässt, denn es wird die Möglichkeit geschaffen, ein vollflächiges Vakuum über die gesamte Umformfläche aufzubringen. Bei dem porösen Werkstoff handelt es sich bevorzugt um einen offenporigen porösen Werkstoff, z. B. offenporiges poröses Aluminium bzw. eine offenporige poröse Aluminiumlegierung.

Dabei wird bevorzugt ein Werkstoff verwendet, der eine Filterfeinheit von 5 µm bis 250 µm, z. B. 30 µm bis 120 µm und/oder eine Porengröße von 0,1 mm bis 3 mm, z. B. 0,2 mm bis 1,5 mm aufweist.

Porengröße meint dabei den (maximalen) Durchmesser der Poren. Filterfeinheit meint dabei die (minimale) Weite der (Durchgangs)Öffnungen zwischen den Poren der offenporigen Struktur.

Die Erfindung betrifft grundsätzlich die Umformung thermoplastischer Halbzeuge. Besonders bevorzugt werden als Halbzeuge Organobleche eingesetzt.

Bevorzugt werden Halbzeuge oder Organobleche eingesetzt, deren Fasern als Carbonfasern, Glasfasern und/oder Aramidfasern ausgebildet sind. Als thermoplastischer Kunststoff kommen besonders bevorzugt hochtemperaturbeständige thermoplastische Kunststoffe, zum Beispiel Polyetheretherketon (PEEK) oder Polyphenylensulfid (PPS) zum Einsatz. Alternativ können jedoch auch Polypropylen (PP), Polyamid (PA) oder Polyurethan (TPU) verwendet werden, je nach Anforderungen und Einsatzgebiet. Die verwendeten Materialien können bei (konsolidierten) Organoblechen oder Organoblechlagen oder alternativ auch bei (nicht konsolidierten) Faserhalbzeugen oder deren Lagen zum Einsatz kommen.

Im Zuge der Herstellung ist es zweckmäßig, das Halbzeug/Organoblech vor und/oder nach dem Einlegen in die Presse zu erwärmen, um den Umformvorgang zu optimieren. Dabei ist es zweckmäßig, das jeweilige Halbzeug oder Organoblech auf eine Temperatur oberhalb der Glasübergangstemperatur zu erwärmen. Je nach Material bzw. Organoblech bzw. je nach thermoplastischem Kunststoff kann es zweckmäßig sein, das Organoblech auf eine Temperatur von mehr als 180 °C, z. B. mehr als 200 °C zu erwärmen.

Alternativ oder ergänzend ist es zweckmäßig, die Form oder zumindest deren dem Organoblech zugewandte Oberfläche vor und/oder während der Umformung zu erwärmen. Hier kann es ebenfalls zweckmäßig sein, die Form bzw. deren Oberfläche auf eine Temperatur oberhalb der Glasübergangstemperatur des thermoplastischen Kunststoffs zu erwärmen, zum Beispiel auf eine Temperatur von mehr als 180 °C, z. B. mehr als 200 °C.

Außerdem ist es alternativ oder ergänzend besonders vorteilhaft, wenn auch das Druckmedium, mit dem die Membran beaufschlagt wird, zum Beispiel ein Druckgas, erwärmt wird, um den Wärmeeintrag zu optimieren und die Warmumformung zu verbessern.

Erfindungsgemäß wird nicht nur ein Unterdruck auf der der Form zugewandten Seite der Membran angelegt, sondern die abgewandte Seite der Membran wird außerdem mit einem Überdruck beaufschlagt, wobei ein Überdruck von zumindest 20 bar erzeugt wird. Erfindungsgemäß wird folglich mit hohen Drücken gearbeitet, um der Tatsache Rechnung zu tragen, dass z. B. konsolidierte Organobleche verarbeitet bzw. umgeformt werden.

Dazu wird bevorzugt nicht - wie bei Membranpressen für die Verarbeitung von Prepregs oder für die Injektion von Harz üblich - mit einem Vakuumsack gearbeitet, sondern die hochelastische Membran wird über die Form gespannt. So kann sie zum Beispiel am Pressenunterteil befestigt und über die Form gespannt werden. Alternativ kann die Membran jedoch auch an dem Pressenoberteil elastisch vorgespannt befestigt sein und dann im Zuge des Schließens der Presse über die Form gespannt werden.

Grundsätzlich können Membranen aus Kautschuk zum Einsatz kommen. Unter Berücksichtigung der Tatsache, dass bevorzugt mit hochtemperaturbeständigen Kunststoffen gearbeitet wird, empfiehlt die Erfindung den Einsatz einer Membran aus einem hochelastischen und zugleich temperaturbeständigen Material, zum Beispiel aus Silikon bzw. auf Silikonbasis. Dabei kann auf vorhandene Silikon-Membrane zurückgegriffen werden, die eine Bruchdehnung von zumindest 500 %, vorzugsweise zumindest 600 % aufweisen. Die Membran weist bevorzugt eine Dicke von zumindest 1 mm, besonders bevorzugt zumindest 2 mm auf.

Wie bereits beschrieben, wird als Organoblech besonders bevorzugt ein vorgefertigtes Halbzeug aus mehreren Organoblechlagen bzw. einer Vielzahl von Organoblechlagen verwendet, die vor dem Einlegen in die Presse zusammengelegt und gegebenenfalls miteinander verbunden werden. Dabei liegt es im Rahmen der Erfindung, die Organoblechlagen einzeln zusammenzulegen und gemeinsam zu verpressen. Bevorzugt werden die Organoblechlagen jedoch zuvor miteinander (in einer gewünschten Anordnung) verbunden, zum Beispiel durch Schweißen und/oder Kleben, wobei dann eine innige Verbindung anschließend im Zuge der Umformung in der Membranpresse erfolgt. Alternativ liegt es im Rahmen der Erfindung, die einzelnen Organoblechlagen in einer Vorpresse zu einem einheitlichen Organoblech zu verbinden.

Dabei können eine Vielzahl von Lagen verwendet werden, zum Beispiel zumindest fünf Lagen, bevorzugt zumindest zehn Lagen. Für hochstabile Bauteile (zum Beispiel für den Flugzeugbau) können auch mehr als zwanzig Lagen zu einem Organoblech zusammengefügt werden. Außerdem können alternativ eine Vielzahl (nicht konsolidierter) Lagen (lose) in die Presse eingelegt werden, z. B. zumindest fünf Lagen, bevorzugt zumindest zehn Lagen. Die Verarbeitung einzelner Lagen hat den Vorteil, dass die im Zuge der Umformung frei gegeneinander abgleiten können, so dass insbesondere auch komplizierte Strukturen mit ggf. mehreren Hinterschnitten einwandfrei gefertigt werden können.

Es liegt dabei im Rahmen der Erfindung, einzelne Lagen mit unterschiedlicher Faserausrichtung zu verwenden bzw. die einzelnen Lagen so zu stapeln, dass ihre Fasern nicht parallel verlaufen, sondern unter einem vorgegebenen Winkel. Auf diese Weise können besonders stabile Organobleche und entsprechende Bauteile hergestellt werden. Über die Auswahl und Anordnung der einzelnen Lagen lassen sich Eigenschaften und Geometrie des Bauteils hervorragend beeinflussen. So besteht zum Beispiel die Möglichkeit, einzelne Lagen in unterschiedlichen Größen unter Bildung eines Halbzeuges, z. B. Organoblechs mit über die Fläche variierender Dicke vorzusehen. So entstehen zum Beispiel in Bereichen, in denen mehr Lagen vorhanden sind, als in anderen Bereichen, Werkstücke mit größerer Dicke bzw. Wandstärke. In ähnlicher Weise besteht die Möglichkeit, die einzelnen Lagen so anzuordnen, dass im Zuge der Umformung bei einer Verschiebung der einzelnen Lagen zueinander eine gewünschte Kantengeometrie des Bauteils entsteht. Sind die einzelnen Lagen zum Beispiel im nicht umgeformten Zustand bündig angeordnet, so kann durch die Umformung eine schräge Kantengeometrie erzeugt werden und umgekehrt kann durch eine schräge Anordnung der einzelnen Lagen im Randbereich durch die Umformung eine gerade Kantengeometrie erzielt werden. So kann es zum Beispiel gewünscht sein, Bauteile mit abgeschrägten Kanten zu erzeugen, um verbesserte Fügeflächen für die Weiterverarbeitung zur Verfügung zu stellen.

Das Verfahren lässt sich durchführen mit einer vakuumunterstützten Presse zum Herstellen eines Bauteils aus einem Faserverbundwerkstoff. Eine solche Presse ist als Membranpresse aufgebaut, die ein Pressenunterteil aufweist, an/auf dem eine Form angeordnet ist und die ein Pressenoberteil aufweist, welches einen gegen das Pressenunterteil abdichtbaren Druckkoffer aufweist. Außerdem ist eine Membran vorgesehen, welche über die Form spannbar ist.

Die Presse weist zumindest einen Presszylinder auf, der auf das Pressenoberteil und/oder das Pressenunterteil wirkt. Außerdem weist die Presse eine Vakuumpumpe auf, mit der auf der einen Seite der Membran, zum Beispiel der Unterseite, ein Unterdruck erzeugbar ist. Optional kann eine Überdruckpumpe vorgesehen sein, mit der auf der anderen Seite der Membran ein Überdruck erzeugbar ist.

Die Presse kann so ausgebildet sein, dass die Form bzw. das Pressenunterteil beheizbar und folglich wie eine Heizvorrichtung ausgerüstet sind. Außerdem ist die Presse so ausgebildet, dass das Druckmedium, mit welchem die Membran beaufschlagt wird, beheizbar ist, indem zum Beispiel eine Heizvorrichtung im Bereich der Zuführung für das Druckmedium angeordnet ist.

Es besteht die Möglichkeit, dass die Membran an dem Pressenunterteil befestigt und über die Form spannbar ist. Alternativ besteht die Möglichkeit, dass die Membran an dem Pressenoberteil, zum Beispiel an dem Druckkoffer, elastisch vorgespannt befestigt ist.

Im Folgenden wird die Erfindung anhand einer lediglich ein Ausführungsbeispiel darstellenden Zeichnung näher erläutert. Es zeigen
- Fig.1: eine Membranpresse in einer vereinfachten Darstellung,
- Fig. 2: den Gegenstand nach Fig. 1 in einer anderen Funktionsstellung,
- Fig. 3: eine abgewandelte Ausführungsform der Presse nach Fig. 1,
- Fig. 4: die Presse nach Fig. 3 in einer anderen Funktionsstellung,
- Fig. 5: einen Umformvorgang eines mehrlagigen Organoblechs in einer ersten Ausführungsform und
- Fig. 6: einen Umformvorgang eines mehrlagigen Organoblechs in einer zweiten Ausführungsform.

In den Figuren ist eine Membranpresse 1 für die Herstellung eines Bauteils aus einem Faserverbundwerkstoff dargestellt. In einer solchen Membranpresse wird ein Bauteil aus einem Faserverbundwerkstoff durch Umformen eines thermoplastischen Halbzeugs, z. B. Organoblechs 2 hergestellt. Die Membranpresse 1 weist im Ausführungsbeispiel ein Pressenunterteil 3 auf, das als Pressentisch ausgebildet ist, auf dem eine Form 4 als Negativform des herzustellenden Bauteils angeordnet ist. Außerdem weist die Presse 1 ein Pressenoberteil 5 auf, welches einen gegen das Pressenunterteil 3 abdichtbaren haubenartigen Druckkoffer 6 aufweist. Dazu ist die untere, auf dem Pressentisch absetzbare umlaufende Stirnfläche 7 des Druckkoffers 6 mit einer umlaufenden Dichtung 8 versehen. Auf das Pressenoberteil 5 wirkt ein Presszylinder 9, wobei im Ausführungsbeispiel der Kolben 10 des Presszylinders 9 an den Druckkoffer 6 angeschlossen ist, so dass der Druckkoffer 6 mit dem Zylinder 9 bzw. dessen Kolben 10 gegen das Pressenunterteil 3 gedrückt wird. Außerdem ist die Membranpresse 1 mit einer elastisch dehnbaren Membran 11 ausgerüstet, welche über die Form 4 spannbar ist. Ferner ist eine Vakuumpumpe 12 vorgesehen, welche im Ausführungsbeispiel an das Pressenunterteil 3 angeschlossen ist. Außerdem kann optional eine Überdruckpumpe 13 vorgesehen sein, die im Ausführungsbeispiel an das Pressenoberteil 5 bzw. an den Druckkoffer 6 angeschlossen ist.

Zum Umformen eines Organoblechs 2 wird dieses Organoblech auf die Form 4 gelegt und die Membran 11 wird unter Zwischenschaltung des Oranoblechs 2 über die Form 4 gedehnt und vorgespannt.

Das Organoblech wird unter Bildung des Bauteils umgeformt, indem die Membran 11 auf der der Form 4 zugewandten Seite über die Vakuumpumpe 12 mit einem Unterdruck beaufschlagt wird und auf der der Form 4 abgewandten Seite mit der Überdruckpumpe 13 mit einem Überdruck beaufschlagt wird, so dass sich das Organoblech 2 unter Bildung des Bauteils an die Form 4 anformt.

Dabei ist vorgesehen, dass das Organoblech 2 vor dem Einlegen in die Presse 1 erwärmt wird. Außerdem ist bevorzugt vorgesehen, dass die Form 4 oder zumindest deren dem Organoblech 2 zugewandte Oberfläche vor und/oder während der Umformung erwärmt wird. Schließlich ist es zweckmäßig, wenn auf das Druckmedium, mit welchem die Membran mit Überdruck beaufschlagt wird, erwärmt wird. Dazu ist in den Figuren eine Heizvorrichtung 14 angedeutet. Die Heizvorrichtungen zum Erwärmen des Organoblechs und zum Erwärmen der Form sind nicht dargestellt.

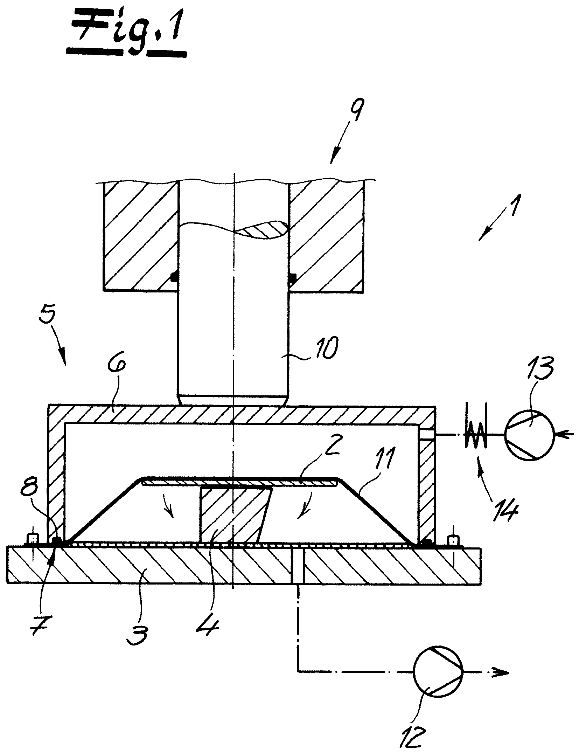

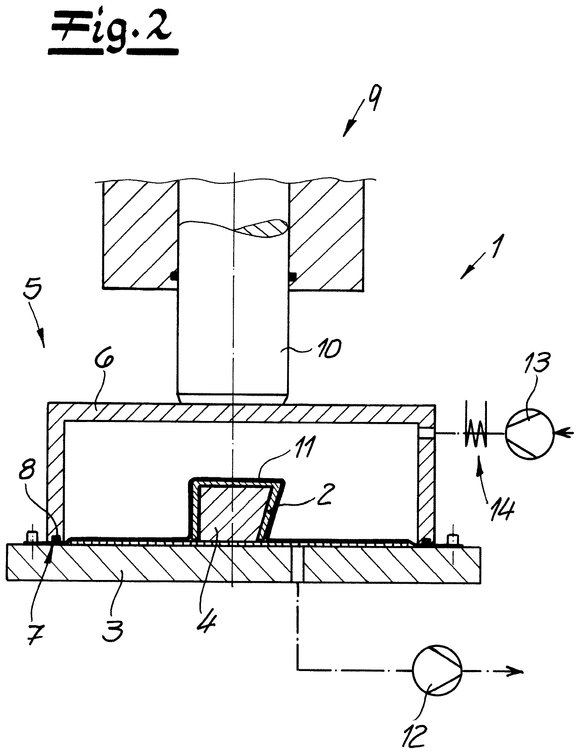

Fig. 1 zeigt eine erste Ausführungsform einer solchen Membranpresse, bei welcher die Membran 11 an dem Pressenunterteil 3 befestigt und über die Form 4 gespannt wird. Fig. 1 zeigt die Presse, nachdem das Organoblech 2 auf die Form 4 aufgelegt und die Membran 11 über die Form 4 unter Zwischenschaltung des Organoblechs 2 gespannt wurde. Außerdem wurde das Pressenoberteil 5 nach dem Einlegen des Organoblechs 2 und nach dem Spannen der Membran 11 auf das Pressenunterteil 3 abgesenkt und abgedichtet. Der Unterdruck kann mit der Vakuumpumpe 12 vor und/oder nach dem Absenken des Pressenoberteils erzeugt werden. Nachdem das Pressenoberteil 5 gegen das Pressenunterteil 3 abgesenkt und abgedichtet wurde, wird der Innenraum des Druckkoffers 6 mit dem Überdruck beaufschlagt. Dabei kann vorgesehen sein, dass der mit dem Zylinder 9 erzeugte Pressdruck, mit welchem die Membranpresse bei sich aufbauendem Innendruck zugehalten wird, sukzessive mit dem Aufbau des Innendrucks erhöht und folglich angepasst wird. Fig. 2 zeigt die Presse nach erfolgtem Aufbau des Überdrucks und des Unterdrucks mit umgeformtem Organoblech 2.

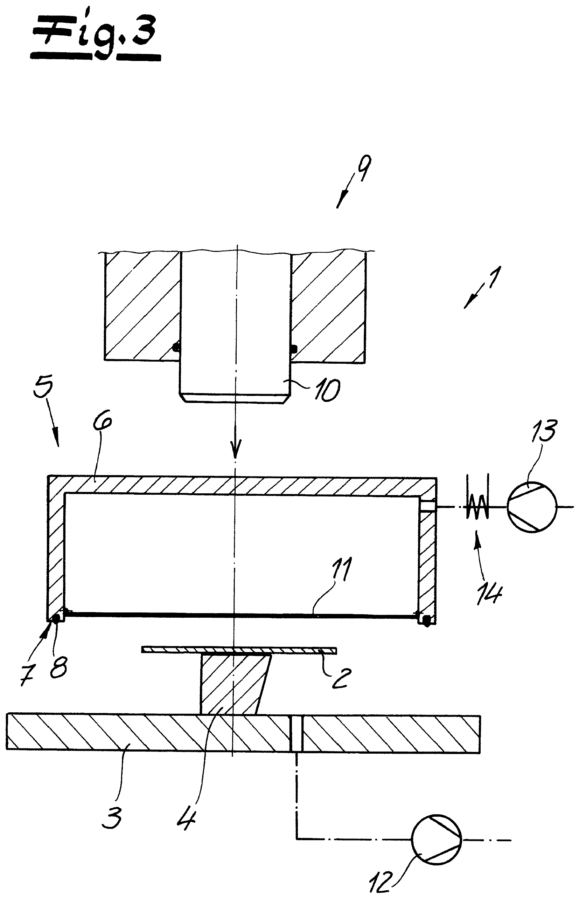

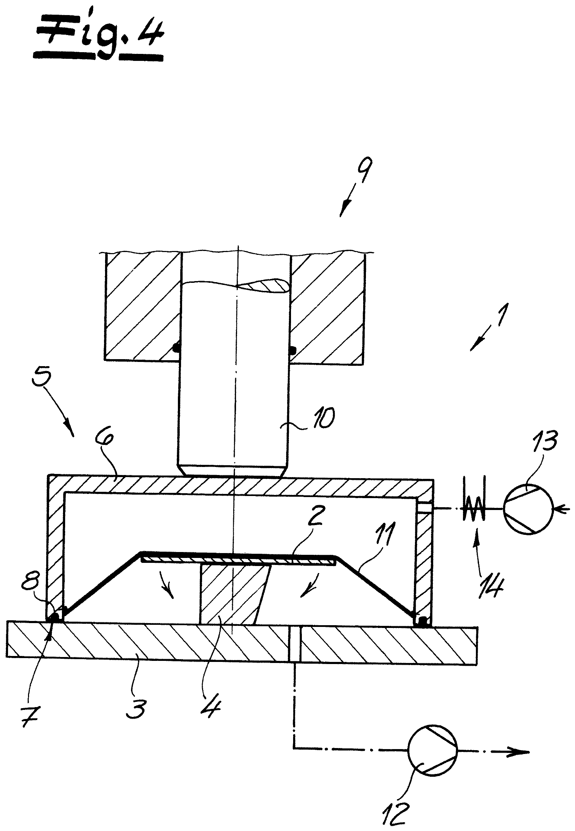

Die Fig. 3 und 4 zeigen eine abgewandelte Ausführungsform einer solchen Membranpresse, bei der die Membran nicht am Pressenunterteil 3, sondern am Pressenoberteil 5, nämlich an dessen Druckkoffer 6 befestigt und elastisch vorgespannt ist (Fig. 3). Nach dem Auflegen des Organoblechs 2 auf die Form 4 wird der Druckkoffer 6 abgesenkt und dabei die Membran unter Zwischenschaltung des Organoblechs 2 über die Form gespannt (Fig. 4). Nachdem die Presse geschlossen wurde, werden einerseits der Unterdruck und andererseits der Überdruck aufgebaut und damit das Organoblech 2 umgeformt und das Bauteil erzeugt.

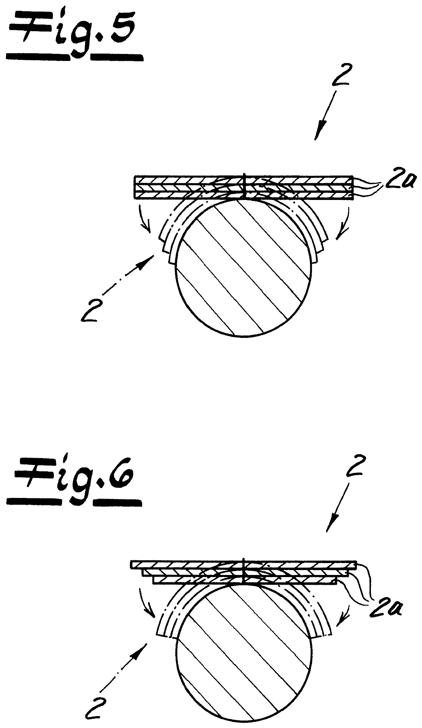

Das Organoblech 2 kann aus mehreren einzelnen Organoblechlagen 2a bestehen, die unter Bildung des Organoblechs 2 zusammengelegt und in der Presse umgeformt werden. Dabei können die Lagen 2a in ihrer Geometrie so aufeinander abgestimmt werden, dass sich die einzelnen Lagen 2a im Zuge der Umformung unter Veränderung der Kantengeometrie des Bauteils gegeneinander verschieben. Diese Option ist in den Fig. 5 und 6 dargestellt. Gemäß Fig. 5 werden die einzelnen Lagen 2a zu einem Organoblech 2 mit geraden Kanten zusammengelegt. Im Zuge der Umformung kommt es zu einer Verschiebung der einzelnen Lagen zueinander, so dass ein Bauteil mit abgeschrägten Kanten entsteht.

Im Gegensatz dazu zeigt Fig. 6 eine Ausführungsform, bei welcher die einzelnen Lagen 2a des Organoblechs 2 nicht bündig übereinander liegen, sondern schräge Kanten bilden, so dass dann im Zuge der Umformung ein Bauteil mit geraden Kanten ohne Schrägen entsteht.

Mit der dargestellten Presse lassen sich grundsätzlich nicht nur Organobleche, sondern auch andere thermoplastische Halbzeuge umformen.

Erfindungsgemäß ist vorgesehen, dass die Form 4 aus einem porösen Material, insbesondere aus porösem Aluminium hergestellt ist. Besonderer Vorteil dieser Ausgestaltung ist das Aufbringen eines vollflächigen Vakuums über die gesamte Umformfläche.

Im Rahmen der Offenbarung lassen sich besonders bevorzugt flache oder geformte Teile, z. B. Flugzeugflügel, Klappen für Flugzeugflügel usw. herstellen.

Die Figuren wurden anhand des bevorzugten Einsatzes von Organoblechen bzw. Organoblechlagen beschrieben. In der dargestellten Weise lassen sich jedoch ebenso andere thermoplastische, (Faser-)Halbzeuge und insbesondere auch Halbzeuge aus einer Vielzahl einzelner Lagen verarbeiten, die (nicht konsolidiert) lose in die Presse eingelegt werden.

## Patentansprüche

1. Verfahren zum Herstellen eines Bauteils aus einem Faserverbundwerkstoff durch Umformen eines thermoplastischen Halbzeugs (2), in einer Membranpresse (1), mit einem Pressenunterteil (3), an/auf dem eine Form (4) angeordnet wird, einem Pressenoberteil (5), welches einen gegen das Pressenunterteil (3) abdichtbaren Druckkoffer (6) aufweist, zumindest einem Presszylinder (9), der auf das Pressenoberteil (5) und/oder das Pressenunterteil (3) wirkt, einer Membran (11), welche über die Form (4) spannbar ist, einer Vakuumpumpe (12), mit der auf der einen Seite der Membran (11) ein Unterdruck erzeugbar ist,
wobei zumindest ein Halbzeug (2) als Werkstück auf oder an die Form gelegt wird,
wobei die elastisch dehnbare Membran (11) unter Zwischenschaltung des Halbzeugs (2) über die Form (4) gedehnt vorgespannt wird und
wobei das Halbzeug (2) unter Bildung des Bauteils umgeformt wird, indem die Membran (11) auf der der Form zugewandten Seite mit einem Unterdruck und auf der der Form abgewandten Seite mit einem Überdruck beaufschlagt wird, so dass sich das Halbzeug (2) an die Form anformt,
wobei eine zumindest bereichsweise luftdurchlässige Form (4) verwendet wird, durch welche Luft im Zuge der Erzeugung des Unterdrucks hindurchgesaugt wird,
wobei der Überdruck zumindest 20 bar beträgt und
wobei eine Form (4) aus einem porösem Werkstoff verwendet wird.

2. Verfahren nach Anspruch 1, wobei eine Form (4) aus einem offenporigen Werkstoff verwendet wird.

3. Verfahren nach einem der Ansprüche 1 bis 2, wobei das Halbzeug (2) vor und/oder nach dem Einlegen in die Presse (1) erwärmt wird, zum Beispiel auf eine Temperatur von mehr als 180 °C.

4. Verfahren nach einem der Ansprüche 1 bis 3, wobei die Form (4) oder zumindest deren dem Halbzeug (2) zugewandte Oberfläche vor und/oder während der Umformung erwärmt wird, zum Beispiel auf eine Temperatur von mehr als 180 °C.

5. Verfahren nach einem der Ansprüche 1 bis 4, wobei das die Membran (11) mit Überdruck beaufschlagende Druckmedium erwärmt wird.

6. Verfahren nach einem der Ansprüche 1 bis 5, wobei als Halbzeug (2) ein Organoblech verwendet wird.

7. Verfahren nach Anspruch 6, wobei das Halbzeug, z. B. Organoblech (2), als vorgefertigtes Halbzeug aus mehreren Lagen, z. B. Organoblechlagen (2a), besteht, die vor dem Einlegen in die Presse (1) zusammengelegt und gegebenenfalls miteinander verbunden werden.

8. Verfahren nach einem der Ansprüche 1 bis 7, wobei die Membran (11) aus Silikon gefertigt ist und/oder wobei die Membran (11) eine Dicke von zumindest 1 mm, vorzugsweise zumindest 2 mm und/oder eine Bruchdehnung von zumindest 500 %, vorzugsweise zumindest 600 % aufweist.

## Claims

1. Method of producing a component made of a fibre-reinforced composite material by forming a thermoplastic semi-finished product (2) in a membrane press (1), with a lower press part (3) on which a mould is (4) is arranged, an upper press part (5) which comprises an pressure case (6) which can be sealed against the lower press part (3), at least one press cylinder (9) which acts on the upper press part (5) and/or the lower press part (3), a membrane (11) which can be stretched over the mould (4), a vacuum pump (12) with which a negative pressure can be produced on one side of the membrane (11),
wherein at least one semi-finished product (2) is placed in the form or a workpiece on or in the mould,
wherein with the interspersion of the semi-finished product (2), the elastically expandable membrane (11) is stretched over the mould (4) and
forming the component, the semi-finished product (2) is formed, in that a negative pressure is applied to the membrane (11) on the side facing the mould and an overpressure is applied to the side facing away from the mould, so that the semi-finished product (2) takes on the shape of the mould,
wherein a mould (4) is used, which at least in sections is permeable to air, through which air is sucked during the production of the negative pressure,
wherein the overpressure is at least 20 bar and
wherein a mould (4) made of a porous material is used.

2. Method according to claim 1, wherein a mould (4) made of an open pore material is used.

3. Method according to any one of claims 1 to 2, wherein before and/or after being placed in the press (1), the semi-finished product (2) is heated, for example to a temperature of more than 180°C.

4. Method according to any one of claims 1 to 3, wherein the mould (4), or at least its surface facing the semi-finished product (2) is heated before and/or during the forming, for example to a temperature of more than 180°C.

5. Method according to any one of claims 1 to 4, wherein the pressure medium exerting an overpressure on the membrane (11) is heated.

6. Method according to any one of claims 1 to 5, wherein an organic sheet is used as the semi-finished product (2) .

7. Method according to claim 6, wherein the semi-finished product, e.g. organic sheet (2), comprises a prefabricated semi-finished product consisting of several layers, e.g. organic sheet layers (2a), which before being placed in the press (1) are combined and possibly connected to each other.

8. Method according to any one of claims 1 to 7, wherein the membrane (11) is made of silicone and/or wherein the membrane (11) has a thickness of at least 1 mm, preferably at least 2 mm and/or an elongation at break of at least 500%, preferably at least 600%.

## Revendications

1. Procédé de fabrication d'un composant en matériau composite à base de fibres par déformation d'un produit semi-fini thermoplastique (2), dans une presse à membrane (1), avec une partie inférieure de presse (3) contre/sur laquelle est disposé un moule (4), une partie supérieure de presse (5), laquelle comporte un caisson de pression (6) pouvant être placé hermétiquement contre la partie inférieure de presse (3), au moins un vérin de presse (9), qui agit sur la partie supérieure de presse (5) et/ou la partie inférieure de presse (3), une membrane (11), laquelle est extensible sur le moule (4), une pompe à vide (12) avec laquelle une dépression peut être produite sur un côté de la membrane (11),
sachant qu'au moins un produit semi-fini (2) est posé en tant que pièce sur ou contre le moule,
sachant que la membrane pouvant être élastiquement étendue (11) est précontrainte étendue sur le moule (4) en intercalant le produit semi-fini (2),
sachant que le produit semi-fini (2) est déformé en formant le composant, la membrane (11) étant sollicitée par une dépression sur le côté tourné vers le moule et par une surpression sur le côté opposé au moule de telle sorte que le produit semi-fini (2) vient se conformer contre le moule,
sachant qu'un moule perméable à l'air au moins en partie (4) est utilisé à travers lequel de l'air est aspiré au cours de la production de la dépression,
sachant que la surpression comporte au moins 20 bars et
sachant qu'un moule (4) composé d'un matériau poreux est utilisé.

2. Procédé selon la revendication 1, sachant qu'un moule (4) composé d'un matériau à pores ouverts est utilisé.

3. Procédé selon l'une quelconque des revendications 1 à 2, sachant que le produit semi-fini (2) est chauffé avant et/ou après l'introduction dans la presse (1), par exemple à une température de plus de 180°C.

4. Procédé selon l'une quelconque des revendications 1 à 3, sachant que le moule (4) ou au moins la surface de celui-ci tournée vers le produit semi-fini (2) est chauffé avant et/ou pendant la déformation, par exemple à une température de plus de 180°C.

5. Procédé selon l'une quelconque des revendications 1 à 4, sachant que la membrane (11) est chauffée par un milieu de pression appliquant une surpression.

6. Procédé selon l'une quelconque des revendications 1 à 5, sachant qu'une tôle organique est utilisée en tant que produit semi-fini (2).

7. Procédé selon la revendication 6, sachant que le produit semi-fini, par ex. : de la tôle organique (2), est composé, en tant que produit semi-fini préfabriqué, de plusieurs couches, par ex. de couches de tôle organique (2a), qui sont réunies et reliées le cas échéant entre elles avant l'introduction dans la presse (1).

8. Procédé selon l'une quelconque des revendications 1 à 7, sachant que la membrane (11) est fabriquée en silicone et/ou sachant que la membrane (11) comporte une épaisseur d'au moins 1 mm, de préférence d'au moins 2 mm et/ou un allongement à la rupture d'au moins 500 %, de préférence d'au moins 600 %.
